(19) Europäisches Patentamt
European Patent Office
Office européen des brevets

(11) Veröffentlichungsnummer: **0 009 089 A1**

(12) # EUROPÄISCHE PATENTANMELDUNG

(21) Anmeldenummer: **79102516.6**

(22) Anmeldetag: **18.07.79**

(51) Int. Cl.[3]: **C 07 D 405/14**, C 08 G 59/42, C 08 G 73/14, C 08 G 73/16

(30) Priorität: **28.07.78 CH 8146/78**

(43) Veröffentlichungstag der Anmeldung: **02.04.80 Patentblatt 80/7**

(84) Benannte Vertragsstaaten: **AT DE FR GB IT NL SE**

(71) Anmelder: **CIBA-GEIGY AG, Patentabteilung Postfach, CH-4002 Basel (CH)**

(72) Erfinder: **Habermeier, Jürgen, Dr., Alemannenweg 12, D-4148 Pfeffingen (CH)**
Erfinder: **Knecht, Eduard, Rütlistrasse 2, CH-4051 Basel (CH)**
Erfinder: **Gisler, Rudolf, Gotthelfstrasse 7, CH-4054 Basel (CH)**

(54) **Carbonsäuredianhydride auf der Basis von Trimellitsäureanhydrid, Verfahren zu ihrer Herstellung und ihre Verwendung als Härtungsmittel.**

(57) Neue Carbonsäuredianhydride werden erhalten, indem man Hydantoindiole oder Diester davon der Formel

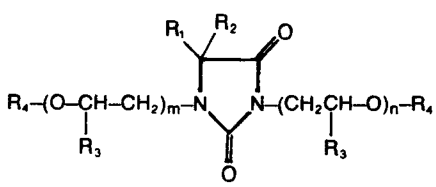

worin

m und n je eine Zahl von 1 bis 4,
$R_1$ und $R_2$ je ein Alkyl mit 1 bis 5 C-Atomen oder
$R_1$ und $R_2$ zusammen den Pentamethylenrest,
$R_3$ ein Wasserstoffatom oder Methyl und
$R_4$ ein Wasserstoffatom, Acetyl oder Propionyl

bedeuten, mit Trimellitsäureanhydrid verestert bzw. umestert.

Die neuen Dianhydride stellen wertvolle Härtungsmittel für Epoxidharze dar und eignen sich zur Herstellung von Polymeren, die sich von Carbonsäuredianhydriden ableiten.

EP 0 009 089 A1

0009089



BEZEICHNUNG GEÄNDERT
siehe Titelseite

CIBA-GEIGY AG
Basel (Schweiz)

3-11950 +

Carbonsäuredianhydride auf Basis von Trimellitsäureanhydrid

Gegenstand der vorliegenden Erfindung sind Carbonsäuredianhydride auf Basis von Trimellitsäureanhydrid und Hydantoindiolen oder Hydantoindioldiestern, Verfahren zu ihrer Herstellung und ihre Verwendung als Härtungsmittel für Epoxidharze und zur Herstellung von Polymeren, die sich von Carbonsäuredianhydriden ableiten, wie zum Beispiel Polyimide.

Tetracarbonsäuredianhydride aus aliphatischen oder aromatischen Dihydroxyverbindungen oder deren Diesterderivaten sind bekannt. Einige dieser Produkte sind technisch bestens eingeführt und finden zur Herstellung von Polyimiden oder als Härtungsmittel für Epoxidharze Verwendung. Beide Verwendungsarten der Dianhydride beziehen sich bevorzugt auf die Herstellung von dünnen Schichten, insbesondere als isolierende Lackschichten. Viele der bekannten Carbonsäuredianhydride sind aber mit dem Nachteil behaftet, dass sie selbst oder deren erste Folgeprodukte nur in speziellen Lösungsmitteln und bei höheren Temperaturen noch löslich sind. So sind zum Beispiel Präpolymere auf Basis von aromatischen Tetracarbonsäuredianhydriden, deren Herstellung in "Journal of Polymer Science", Part A-1, 4, Seite 1531ff (1966) beschrieben wird, nur in aprotischen Lösungsmitteln, wie Dimethylformamid, Dimethylacetamid und N-Methyl-2-pyrrolidon, löslich. Aufgabe der Erfindung war daher die Bereitstellung von neuen Dianhydriden, welche selbst oder deren Zwischenprodukte in ökologisch harmlosen Lösungsmitteln gut löslich sind und die eine gute Verträglichkeit mit gebräuchlichen Epoxidharzen aufweisen.

Es wurde gefunden, dass Carbonsäuredianhydride auf Basis von Trimellitsäureanhydrid und Hydantoindioldiestern die oben geschilderten Nachteile nicht aufweisen und sich aufgrund ihrer vorteilhaften Eigenschaften besonders gut auf dem Gebiet des Oberflächenschutzes einsetzen lassen. Aus den erfindungsgemässen Dianhydriden lassen sich in Kombination mit den gebräuchlichen Epoxidharzen auf Metallen gut haftende, hochelastische und gegen organische Säuren sehr beständige Schutzüberzüge, welche zudem eine gute Verformbarkeit sowie Sterilisationsfestigkeit aufweisen, herstellen.

Gegenstand der vorliegenden Erfindung sind somit neue Dianhydride der Formel I

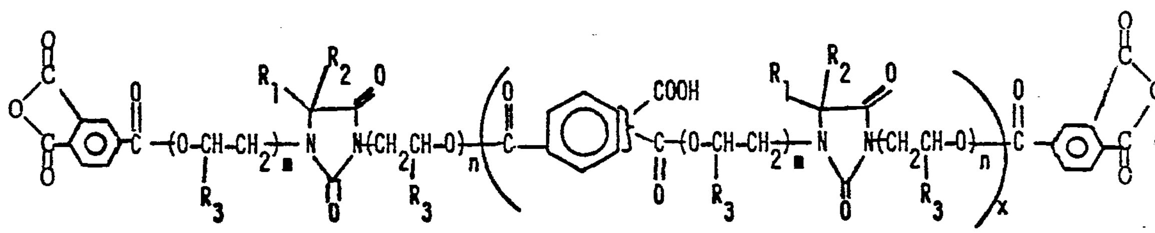 (I)

oder deren Gemische, worin in der Formel

x null oder eine Zahl von 1 bis 10, vorzugsweise null oder eine Zahl von 1 bis 3,

m und n je eine Zahl von 1 bis 4,

$R_1$ und $R_2$ je ein Alkyl mit 1 bis 5 C-Atomen oder

$R_1$ und $R_2$ zusammen den Pentamethylenrest und

$R_3$ ein Wasserstoffatom oder Methyl bedeuten.

Vorzugsweise bedeuten in der Formel I

x null oder eine Zahl von 1 bis 3,

m und n je 1 oder 2,

$R_1$ und $R_2$ je Methyl und

$R_3$ Wasserstoffatom oder Methyl, insbesondere ein Wasserstoffatom.

Besonders interessant sind Dianhydride der Formel II

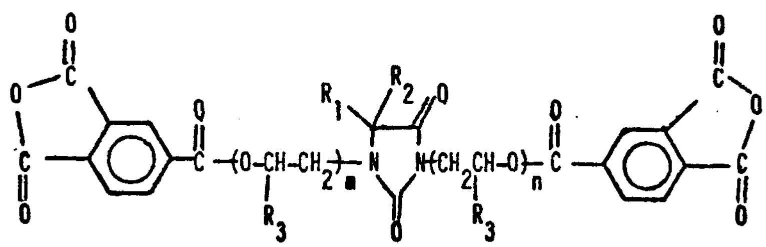 (II)

worin

m und n je eine Zahl von 1 bis 4,

$R_1$ und $R_2$ je ein Alkyl mit 1 bis 5 C-Atomen oder

$R_1$ und $R_2$ zusammen den Pentamethylenrest und

$R_3$ ein Wasserstoffatom oder Methyl bedeuten.

Vorzugsweise bedeuten in der Formel II

m und n je 1 oder 2,

$R_1$ und $R_2$ je Methyl und

$R_3$ Wasserstoffatom oder Methyl, insbesondere ein Wasserstoffatom .

Die Verbindungen der Formel I können hergestellt werden, indem man x + 1 Mole eines Hydantoindiols oder dessen Diester der Formel III

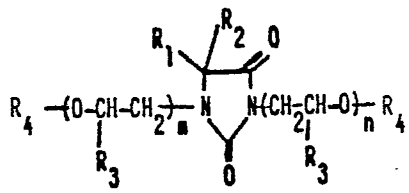

(III)

oder Gemische davon, worin in der Formel $R_1$, $R_2$, $R_3$, m und n die gleiche Bedeutung wie in Formel I haben und beide $R_4$ je für ein Wasserstoffatom, Acetyl oder Propionyl stehen, mit x + 2 Molen Trimellitsäureanhydrid, gegebenenfalls in Gegenwart eines Katalysators, zu Verbindungen der Formel I verestert bzw. umestert.

Die Hydantoindiole der Formel III stellen bekannte Verbindungen dar und können nach dem in "Helvetica Chimica Acta" 54, (6), 1971, Seite 1695ff, beschriebenen Verfahren hergestellt werden, in dem man 5,5-dialkylsubstituierte Hydantoine m + n Mole Aethylen- oder Propylenoxid anlagert.

Die Diester der Formel III sind nach wohlbekannten und weit angewendeten Verfahren leicht herstellbar. So kann z.B. das Diacetat aus 1,3-Di-(hydroxyäthyl)-5,5-dimethylhydantoin durch Reaktion dieses Diols mit Essigsäureanhydrid im Ueberschuss bei Siedetemperatur hergestellt werden. Das Produkt wird durch Abdestillieren von überschüssigem Acetanhydrid und von gebildeter Essigsäure isoliert. Zur Reinigung kann das Diacetat im Vakuum destilliert werden.

Vorzugsweise geht man bei der Herstellung der erfindungsgemässen Verbindungen von 1 Mol einer Verbindung der Formel III aus und setzt diese mit 2 Mol Trimellitsäureanhydrid zu Verbindungen der Formel II um.

Die Umesterung der Diester der Formel III mit Trimellitsäureanhydrid wird zwischen 100 und 300°C, bevorzugt zwi-

schen 150 und 250°C, durchgeführt, wenn ohne Katalysatoren gearbeitet wird. Wird mit üblichen Umesterungskatalysatoren gearbeitet, wird die Reaktion zwischen 100 und 220°C durchgeführt. Solche Katalysatoren sind z.B. : Calciumacetat, Manganacetat, Zinkacetat, Bleiacetat, Tetraisopropylorthotitanat, etc. und Mischungen daraus.

Der Verlauf der Reaktion kann an Hand der abgespaltenen und abdestillierten Essigsäure bzw. Propionsäure verfolgt werden.

Ohne Verwendung von Katalysatoren ist die Reaktion in 5-7 Stunden beendet.

Bei der Veresterung eines Diols der Formel III mit Trimellitsäureanhydrid werden je nach Temperatur, Dauer der Reaktion und eingesetztem Katalysator mehr oder weniger vollständig die Dianhydride der Formel I oder II erhalten. Als Nebenprodukte können in den Anhydridgemischen noch Moleküle mit freien Carboxylgruppen enthalten sein. Die direkte Veresterung läuft ohne Katalysatoren zwischen 100 und 250°C in 5 bis 7 Stunden ab. Bevorzugt arbeitet man bei 160 bis 225°C ohne Katalysator und unter vermindertem Druck. Bei Verwendung von Katalysatoren, als solche können auch die bei der Umesterung genannten eingesetzt werden, wird die Reaktion bei 140 bis 220°C durchgeführt. Die Veresterungsreaktion wird durch Titration der Säureäquivalente, die zunehmen, verfolgt.

Die erfindungsgemässen Verbindungen können ferner hergestellt werden, indem die Diole der Formel III mit Trimellitsäurechloridanhydrid unter Abspaltung von Chlorwasserstoff umsetzt.

Eine weitere Möglichkeit, die erfindungsgemässen Verbindungen herzustellen, besteht in der Umesterung eines Trimellitsäurealkylesteranhydrids, z.B. Trimellitsäuremethylesteranhydrid, mit den Diolen der Formel III.

Die neuen Dianhydride oder Dianhydridgemische schmelzen im Bereich von 50 bis 120°C und stellen farblose bis gelb oder hellbraun verfärbte Produkte dar. Die neuen Verbindungen weisen gute Löslichkeitseigenschaften auf und können in den für Lacke üblicherweise verwendeten Lösungsmitteln, wie Aethylglykolacetat, Dioxan, Aceton, Chloroform etc. leicht gelöst werden.

Die erfindungsgemässen Dianhydride weisen neben den guten Löslichkeitseigenschaften auch einen günstigen Schmelzbereich als Anhydridhärter und eine gute Verträglichkeit mit den gebräuchlichen Epoxidharzen auf. Sie können daher gut zum Beispiel mit festen und flüssigen Epoxidharzen auf Basis von Bisphenol A, Bisphenol F, hydriertem Bisphenol A, Hydantoinen, Cyanursäure und Dicarbonsäuren verarbeitet werden.

Wie eingangs erwähnt, können die erfindungsgemässen Verbindungen auch zur Herstellung von Polymeren, die sich von Dianhydriden ableiten, Verwendung finden, wie Polyamidsäuren, Polyimide oder Polyesteramidimide.

## Herstellungsbeispiele

### Beispiel 1

Man schmilzt 192 g (1,0 Mol) Trimellitsäureanhydrid bei 180°C. Dazu tropft man innerhalb von 50 Minuten 108 g (0,5 Mol) technisch hergestelltes 1,3-Di(2'-hydroxyäthyl)-5,5-dimethylhydantoin unter Rühren zu. Die Temperatur wird dabei auf 205°C gesteigert. Anschliessend rührt man noch etwa 5 Stunden bei 220°C, dabei wird unter vermindertem Druck (1 bar → 195 mbar) kondensiert. Die Veresterungsreaktion läuft gleichmässig ab, es können etwa 15 ml Wasser isoliert werden. 1 Stunde nach Reaktionsbeginn weist eine aus dem Ansatz entnommene Probe 0,75 Anhydridgruppenäquivalente/kg und 5,6 Säuregruppenäquivalente/kg auf. Am Ende der Reaktion hat das Produkt 2,75 Anhydridgruppenäquivalente/kg und nur noch 1,6 Säuregruppenäquivalente/kg. Das Reaktionsprodukt schmilzt bei 78°C (Kofler); man erhält 260 g der Substanz. Eine 50%-ige Lösung des Produkts in Aethylglykolacetat hat bei 25°C eine Viskosität von 250 mPa·s.

### Vergleichsbeispiel

Gemäss "Journal of Polymer Science" A-1, 1966, Seite 1531ff werden 0,5 Mol 1,4-Phenylendiacetat und 1,0 Mol Trimellitsäureanhydrid umgesetzt. Das so erhaltene rohe, dunkel gefärbte Dianhydrid bzw. das Dianhydrid enthaltende Gemisch weist einen Anhydridgehalt von 3,77 Aequivalenten/kg und einen Säuregehalt (von Verunreinigung) von 1,55 Aequivalenten/kg auf. Dieses Produkt erweicht um 100°C.

Zum geeigneten Vergleich mit dem gemäss Beispiel 1 hergestellten Anhydridprodukt wurde das gemäss "Journal of Polymer

Science" hergestellte Anhydridprodukt nicht weiter gereinigt. Ausserdem beeinflussen die Verunreinigungen, Nebenprodukte mit freien Carboxylgruppen, das Lösungsverhalten des Anhydridproduktes positiv.

| | Produkt gemäss Vergleichsbeispiel | Produkt gemäss Beispiel 1 |
|---|---|---|
| Löslichkeit in Aethylglykolacetat bei 50°C | nur Spuren des Produktes löslich, welche beim Kühlen auf 20°C wieder ausfallen | sehr gut löslich |
| Stabilität einer 50%-igen Lösung in Aethylglykolacetat bei Raumtemperatur | 50%-ige Lösung - auch heiss - nicht herstellbar (instabil) | 50%-ige Lösung bei 20°C mehr als 6 Wochen lagerstabil |

Dieser Vergleich zeigt, dass die aus "Journal of Polymer Science" bekannten Produkte für Lackanwendungen als Härter für Epoxidharze völlig ungeeignet sind, da es nicht möglich ist, die benötigte Härtermenge in einem Lacklösungsmittel überhaupt in Lösung zu bringen.

Beispiel 2

Eine Mischung aus 148 g (0,5 Mol) 1,3-Di-(acetoxyäthyl)-5,5-dimethylhydantoin und 192 g (1,0 Mol) Trimellitsäureanhydrid wird 1 Stunde bei 220°C gerührt. Dann wird während 7 Stunden bei 235-240°C unter 325-520 mbar die bei der Umesterung entstehende Essigsäure aus dem Ansatz abdestilliert; es können ungefähr 40 ml davon isoliert werden.

Das Reaktionsprodukt (Ausbeute: 270 g) schmilzt bei 65,0°C und weist einen Anhydridgehalt von 2,8 Anhydridgruppenäquivalente/kg auf. Eine 50%-ige Lösung in Aethylglykolacetat hat bei 25°C eine Viskosität von 50 mPa·s.

100 g des oben erhaltenen Reaktionsproduktes werden 1 mal aus Aethylglykolacetat und 1 mal aus Chloroform umkristallisiert. Man erhält 70 g farbloser Kristalle mit folgenden Eigenschaften:

Erweichungspunkt (nach Kofler): 114-117°C
Anhydridgehalt: 3,25 Aequivalente/kg (91,7% der Theorie)

Elementaranalyse ($C_{27}$ $H_{20}$ $N_2$ $O_{12}$)

| gefunden: | berechnet: |
|---|---|
| 4,90%N | 4,96%N |
| 57,20%C | 57,43%C |

Das Produkt entspricht gemäss H-NMR-Sprektralanalyse (60Mc) untenstehender Struktur:

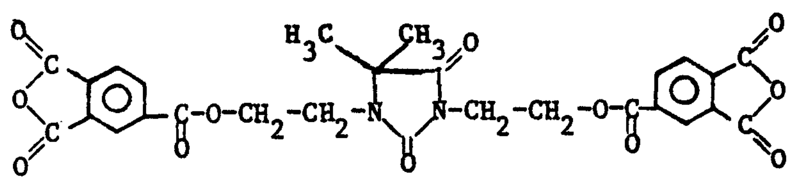

Beispiel 3

Dianhydridgemisch aus 1,3-Di-(2-hydroxyäthyl)-5,5-dimethylhydantoin und Trimellitsäureanhydrid.

Man arbeitet genau gemäss Beispiel 1, wobei hier jedoch 216 g (1 Mol) technisches 1,3-Di-(2-hydroxyäthyl)-5,5-dimethylhydantoin mit 288 g Trimellitsäureanhydrid (1,5 Mol) umgesetzt werden.

Das so enthaltene Reaktionsprodukt ist ein hartes Harz, das einen Erweichungspunkt (Kofler) von 95-105°C aufweist. Das Dianhydridgemisch weist 2,14 Aequivalente/kg Anhydridgruppen und 1,0 Aequivalente/kg Carboxylgruppen auf. Eine 50%-ige Lösung der Substanz in Aethylglykolacetat weist bei

25°C eine Viskosität von 825 mPa.s. auf.

Beispiel 4

Dianhydridgemisch aus 2 Mol Trimellitsäureanhydrid und 1 Mol eines Addukts aus 1,3-Di-(2-hydroxyäthyl)-5,5-pentamethylenhydantoin mit 4 Molen Propenoxid.

Gemäss Beispiel 1 setzt man 2 Mole (384 g) Trimellitsäureanhydrid mit 1 Mol des Addukts aus 1 Mol 1,3-Di-(2-hydroxyäthyl)-5,5-pentamethylenhydantoin und 4 Molen Propenoxid um.

Man erhält ein hartes, sprödes Dianhydridgemisch, das einen Anhydridgehalt von 1,4 Aequivalenten/kg aufweist (59,3% der Theorie). Dieses Produkt erweicht (Kofler) bei 80-100°C. Die 50%-ige Lösung in Aethylglykolacetat weist bei 25°C eine Viskosität von 240 m Pa.s. auf.

Das Produkt enthält als Hauptbestandteil ein Anhydrid enthaltendes Molekül folgender Struktur:

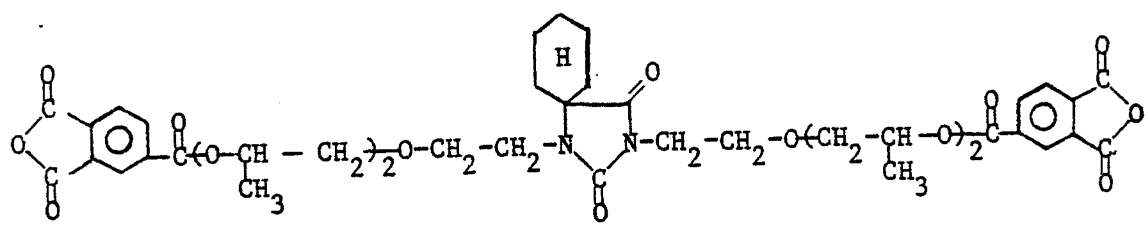

0009089

## Anwendungsbeispiele

### Beispiel A

Eine Mischung aus 100 g eines aus Bisphenol A hergestellten Epoxidharzes mit einem Epoxidgehalt von 1,0 Epoxidäquivalenten/kg und 14,1 g des nach Beispiel 1 hergestellten Dianhydridgemisches wird in Aethylglykolacetat als 50%-ige Lacklösung gelöst. Dieser Klarlack wird auf Weissblechplatten (E 1) mittels Giesslineal aufgetragen und 10 Minuten bei 190°C eingebrannt. Auf diese Weise stellt man 8 und 20 Mikron starke Ueberzüge her.

Die 20 Mikron starken Ueberzüge werden zur Härtebestimmung verwendet:

Härte nach Persoz (Sekunden): 355

Die 8 Mikron starken Ueberzüge wurden auf mechanische Eigenschaften und chemische Beständigkeiten untersucht (Bewertung gemäss DIN 53230; Note 0 = bester Wert = Lack unverändert, Note 5 = Lack total zerstört).

| | | | |
|---|---|---|---|
| Näpfchentiefzug (Verformbarkeit) | = | 1 | (gut) |
| Acetonreibtest (20 x) | = | 0 | (sehr gut) |
| $H_2O$-Sterilisierfestigkeit (1 Stunde/120°C) | = | 0 | (sehr gut) |
| Essigsäure 2%-ig (6 Stunden/98°C) | = | 2 | (befriedigend) |
| Essigsäure 5%-ig/Weinsäure 2%-ig (6 Stunden/98°C) | = | 2 | (befriedigend) |

Auffallend bei den erhaltenen Ueberzügen ist neben der hohen Härte das ausgezeichnete Tiefzugverhalten und die guten Säurebeständigkeiten während 6 Stunden bei 98°C.

Beispiel B

100 g des in Beispiel A verwendeten Epoxidharzes werden mit 12,6 g des gemäss Beispiel 2 hergestellten Dianhydrids in Form des Rohproduktes in Aethylglykolacetat zu einer 50%-igen Lacklösung gelöst. Dieser Klarlack wird mittels Giesslineal auf Weissblech-Platten (E 1) aufgetragen und anschliessend bei 190°C während 10 Minuten eingebrannt. Die so erhaltenen 8 und 20 Mikron starken, vollkomen klaren Ueberzüge werden wie in Beispiel A beschrieben lacktechnisch geprüft (Beurteilung gemäss DIN 53230).

Härte nach Persoz (Sekunden): 360

Näpfchentiefzug (Verformbarkeit) = 0

$H_2O$-Sterilisierfestigkeit = 0
(1 Stunde/120°C)

$H_2O$-Sterilisierfestigkeit der vorher tiefgezogenen Näpfchen = 3 (ausreichend)
(1 Stunden/120°C)

Essigsäure 2%-ig (6 Stunden/98°C)= 1

Essigsäure 5%-ig/Weinsäure 2%-ig = 1
(6 Stunden/98°C)

Auch bei diesen Ueberzügen ist die ausgezeichnete Härte bei hervorragender Tiefziehfähigkeit und guter chemischer Resistenz hervorzuheben.

Patentansprüche

(für alle benannten Länder ausser Oesterreich)

1. Dianhydride der Formel I

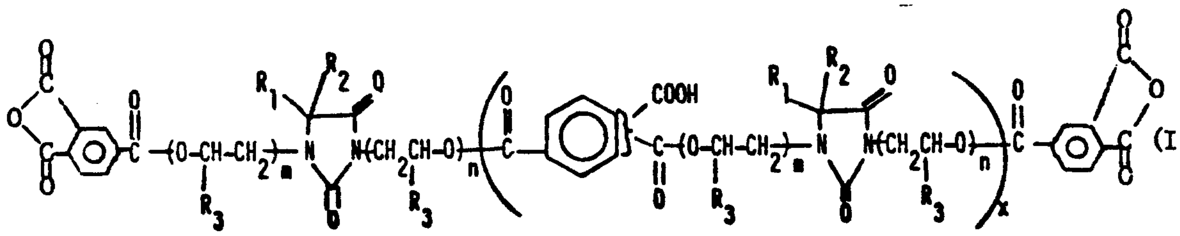

(I)

oder deren Gemische, worin in der Formel

x null oder eine Zahl von 1 bis 10,

m und n je eine Zahl von 1 bis 4,

$R_1$ und $R_2$ je ein Alkyl mit 1 bis 5 C-Atomen oder

$R_1$ und $R_2$ zusammen den Pentamethylenrest und

$R_3$ ein Wasserstoffatom oder Methyl bedeuten.

2. Dianhydride oder deren Gemische gemäss Anspruch 1, worin in der Formel I x für null oder eine Zahl von 1 bis 3 steht.

3. Dianhydride oder deren Gemische gemäss Anspruch 1, worin in der Formel I

x null oder eine Zahl von 1 bis 3,

m und n je 1 oder 2,

$R_1$ und $R_2$ je Methyl und

$R_3$ ein Wasserstoffatom oder Methyl bedeuten.

4. Dianhydride gemäss Anspruch 1 der Formel II

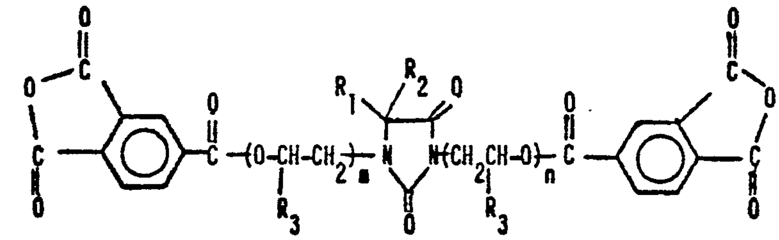

(II)

worin

m und n je eine Zahl von 1 bis 4,
$R_1$ und $R_2$ je ein Alkyl mit 1 bis 5 C-Atomen oder
$R_1$ und $R_2$ zusammen den Pentamethylenrest und
$R_3$ ein Wasserstoffatom oder Methyl bedeuten.

5. Dianhydride gemäss Anspruch 4, worin in der Formel II
m und n je 1 oder 2,
$R_1$ und $R_2$ je Methyl und
$R_3$ ein Wasserstoffatom oder Methyl bedeuten.

6. Verfahren zur Herstellung von Dianhydriden der Formel I gemäss Anspruch 1, dadurch gekennzeichnet, dass man x + 1 Mol, wobei x null oder eine Zahl von 1 bis 10 darstellt, eines Hydantoindiols oder dessen Diester der Formel III

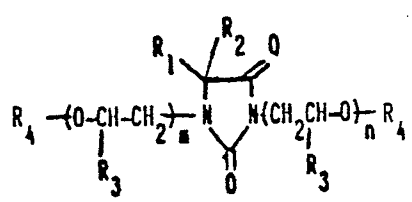

(III)

oder Gemische davon, worin in der Formel $R_1$, $R_2$, $R_3$, m und n die gleiche Bedeutung wie in Formel I haben und beide $R_4$ je für ein Wasserstoffatom, Acetyl oder Propionyl stehen, mit x + 2 Molen Trimellitsäureanhydrid, gegebenenfalls in Gegenwart eines Katalysators, zu Verbindungen der Formel I verestert bzw. umestert.

7. Verfahren gemäss Anspruch 6, dadurch gekennzeichnet, dass man x+1 Mole einer Verbindung der Formel III, worin x für null oder eine Zahl von 1 bis 3 steht, mit x+2 Molen Trimellitsäureanhydrid umsetzt.

8. Verfahren gemäss Anspruch 6, dadurch gekennzeichnet, dass man 1 Mol einer Verbindung der Formel III mit 2 Mol Trimellitsäureanhydrid umsetzt.

9. Verwendung der Dianhydride der Formel I gemäss Anspruch 1 als Härtungsmittel für Epoxidharze.

10. Verwendung der Dianhydride der Formel I gemäss Anspruch 1 zur Herstellung von Polymeren, die sich von Dianhydriden ableiten.

Patentansprüche

(für Oesterreich)

1. Verfahren zur Herstellung von Dianhydriden der Formel I

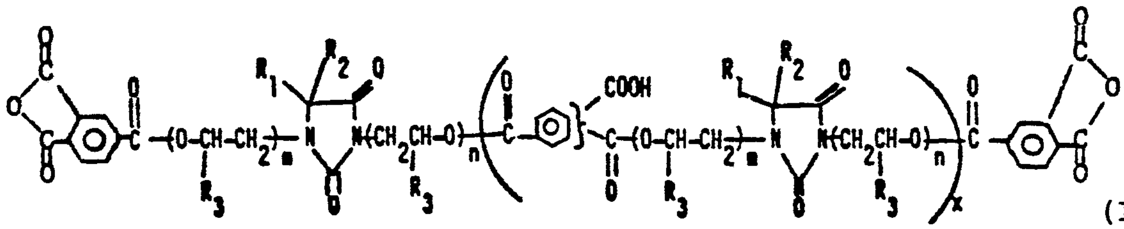

(I)

oder deren Gemische, worin in der Formel

x null oder eine Zahl von 1 bis 10,
m und n je eine Zahl von 1 bis 4,
$R_1$ und $R_2$ je ein Alkyl mit 1 bis 5 C-Atomen oder
$R_1$ und $R_2$ zusammen den Pentamethylenrest und
$R_3$ ein Wasserstoffatom oder Methyl bedeuten,
dadurch gekennzeichnet, dass man x + 1 Mol eines Hydantoindiols oder dessen Diester der Formel III

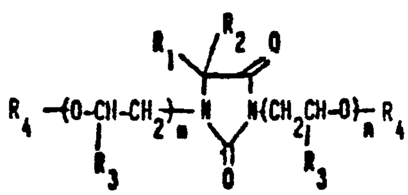

(III)

oder Gemische davon, worin in der Formel beide $R_4$ je für ein Wasserstoffatom, Acetyl oder Propionyl stehen, mit x + 2 Molen Trimellitsäureanhydrid, gegebenenfalls in Gegenwart eines Katalysators, zu Verbindungen der Formel I verestert bzw. umestert.

2. Verfahren gemäss Anspruch 1, dadurch gekennzeichnet, dass man x + 1 Mol einer Verbindung der Formel III, worin x für null oder eine Zahl von 1 bis 3 steht, mit x + 2 Molen Trimellitsäureanhydrid umsetzt.

3. Verfahren gemäss Anspruch 1, dadurch gekennzeichnet, dass man 1 Mol einer Verbindung der Formel III mit 2 Mol Trimellitsäureanhydrid umsetzt.

4. Verwendung der erfindungsgemäss hergestellten Dianhydride der Formel I gemäss Anspruch 1 als Härtungsmittel für Epoxidharze.

5. Verwendung der erfindungsgemäss hergestellten Dianhydride der Formel I gemäss Anspruch 1 zur Herstellung von Polymeren, die sich von Dianhydriden ableiten.

Europäisches Patentamt

# EUROPÄISCHER RECHERCHENBERICHT

0009089

Nummer der Anmeldung

EP 79 102 516.6

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | US - A - 3 293 248 (SCHENECTADY CHEMICALS)<br>* Ansprüche; Spalte 1, Zeilen 29 bis 55; Spalte 2, Zeilen 41 bis 44 *<br>-- | 1, 5-9 | C 07 D 405/14<br>C 08 G 59/42<br>C 08 G 73/14<br>C 08 G 73/16 |
| | GB - A - 1 034 873 (GENERAL ELECTRIC)<br>* Seite 3, Zeile 33 bis Seite 4, Zeile 5; Ansprüche *<br>-- | 5-9 | RECHERCHIERTE SACHGEBIETE (Int. Cl.3)<br>C 07 D 405/14<br>C 08 G 59/42<br>C 08 G 73/14<br>C 08 G 73/16 |
| | GB - A - 1 482 068 (CIBA-GEIGY)<br>* Anspruch 12 *<br>---- | 5-8 | |
| | Der vorliegende Recherchenbericht wurde für alle Patentansprüche erstellt. | | |

KATEGORIE DER GENANNTEN DOKUMENTE

- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument

| Recherchenort | Abschlußdatum der Recherche | Prüfer |
|---|---|---|
| Berlin | 04-12-1979 | FROELICH |